# EUROPEAN PATENT APPLICATION

(11) **EP 3 398 712 A1**
(43) Date of publication of application: **07.11.2018**
(21) Application number: 18169415.9
(22) Date of filing: 26.04.2018
(51) Int. Cl.: B23Q 7/00, B23Q 7/03, B65G 15/58

(54) **SYSTEM AND METHOD OF DISCHARGING PARTS**

(30) Priority: 02.05.2017 ES 201730648
(71) Applicant: JAE & Metalband S.L.U., 26006 Logroño (La Rioja) (ES)
(72) Inventor: Martínez Quintana, David, 26009 Logroño (La Rioja) (ES)
(74) Representative: Maslanka Kubik, Dorota Irena

(57) **Abstract**

A system of discharging machined parts from machining equipment, with the machining equipment being of the part-carrying pallet loop conveying type, the pallets (10) comprising at least one support for supporting a part to be machined, the system comprising:
- machined part extraction means for removing a machined part from its corresponding support, comprising:
• at least one extraction fork (14),
• end separation and sweeping means,
• a horizontal actuator (18) to move the fork (14) forward in the direction transverse to the forward movement of the pallet (10), and
• a vertical actuator (20) to lower the fork (14) and thereby separate the end of the part by means of contact with the end separation and sweeping means,
with said extraction means being arranged in the lower portion of the machining equipment under the pallet (10) conveying loop; and
- discharging means for discharging removed machined parts to a part loading/unloading station.

## Description

### Field of the Invention

The present invention generally relates to the field of machining parts, and more specifically to systems of removing and discharging parts once they have been machined. Specifically, the present invention relates to the field of machining watertight profiles for use in the automobile industry.

### Background of the Invention

Pallet transfer machines for machining parts allow conveying parts to be machined, which are held on a pallet, to the required machining station or stations. In the specific case of multipallet transfer machines, multiple pallets are all coupled to one and the same conveyor, which successively conveys them along a production line. Once a part has been machined, it must be taken off the pallet to allow the coupling of a new part to be machined.

Gripper-type part extractors are known in the art. These are automatic manipulators which allow discharging the machined parts "by gripping them" by their upper portion and moving them laterally to deposit them in a side area of the machine. This means that there has to be additional space on one side of the machine to that end, so the resulting overall system takes up too much useful space in the factory.

Therefore, there is a need in the art for a system for the automatic discharging of machined parts mounted on pallets which allows reducing cycle time and particularly allows reducing the useful space taken up by the machining equipment and the discharging system as a whole.

### Summary of the Invention

To solve the problems from the prior art, the present invention discloses a system which allows discharging the machined parts through the lower portion of the machining equipment and moving said parts closer to the operator so that said operator may take them off.

Therefore, in a first aspect the present invention discloses a system of discharging parts from machining equipment, with the machining equipment being of the part-carrying pallet loop conveying type, the pallets comprising at least one support for supporting a part to be machined. The system according to the present invention comprises:
- machined part extraction means for removing a machined part from its corresponding support, comprising:
   - at least one extraction fork,
   - end separation and sweeping means,
   - a horizontal actuator to move the fork forward in the direction transverse to the forward movement of the pallet, and
   - a vertical actuator to lower the fork and thereby separate the end of the part by means of contact with the end separation and sweeping means,
   with said extraction means being arranged in the lower portion of the machining equipment under the pallet conveying loop; and
- discharging means for discharging removed machined parts to a part loading/unloading station.

Given that the extraction means are arranged under the pallet conveying loop, the resulting discharging system is more compact than those known in the prior art since it does not require any additional space in the sides of the machining equipment.

According to a second aspect, the present invention also discloses a related method of discharging machined parts, comprising the steps of:
- removing a machined part from its support, allowing said part to fall into the lower portion of the machining equipment under the pallet conveying loop. This step of removing the machined part from its support in turn comprises the sub-steps of:
   - providing a pallet having a machined part supported in the extraction position;
   - moving extraction means forward in a direction transverse to the forward movement of the pallet until they are located at an end of the machined part;
   - producing the separation of the end of the machined part;
   - sweeping the machined part until causing it to fall due to gravity; and
- conveying the machined and removed part to a part loading/unloading station.

### Brief Description of the Drawings

The present invention will be better understood with reference to the following drawings illustrating a preferred embodiment of the invention provided by way of example, and said drawings must not be interpreted as being limiting of the invention in any way:
Figure 1 shows a perspective view of the discharging system according to the preferred embodiment of the present invention.
Figure 2 shows a side view of the system of Figure 1.
Figure 3 shows a perspective view of the extraction means of the system according to the preferred embodiment of the present invention.
Figure 4 shows a perspective view of part of the discharging means according to the preferred embodiment of the present invention.
Figures 5A-5E show front views of the extraction means according to a preferred embodiment of the present invention in different steps of the method.

### Detailed Description of the Preferred Embodiments

According to the preferred embodiment of the present invention described below, the system of discharging machined parts is intended for being installed in a multipallet transfer machine operating along a linear production line following a closed loop path of a conveyor. However, one skilled in the art will understand that the system of the present invention can operate in a manner similar to other types of known machines.

As is known in the art, each part to be machined (for example, watertight profiles) has a type of longitudinal clamp with the "negative" shape of a "strip"-type support (the shape of the inner surface of the clamp is similar to the shape of the outer surface of the "strip"-type support) which allows the mounting (fitting) of the part on said support. Throughout the specification, "strip" will be understood as a thin and narrow element which is longitudinally arranged in the pallet and projects from same for supporting a part. The operator mounts each part on the pallet on the corresponding strip and a pressure gripper closes over the part, either by means of a gripper manipulator or automatically by the pallet itself, etc. While the parts are being moved and machined through the upper portion of the conveyor, they are properly held by means of pressure grippers in addition to their corresponding strips. The use of "strip"-type supports is common in the art; however, the present invention will likewise work with machines using supports of another type for supporting the parts to be machined on the pallets.

According to the preferred embodiment described hereinbelow, each pallet conveys two parts to be machined. However, one skilled in the art will understand that each pallet may also convey a single part or more than two parts, and the discharging system of the present invention may be used in any of said cases.

After each part has been suitably machined in the upper portion of the conveyor along the different working stations, it returns to the operator loading station in the lower portion of the conveyor.

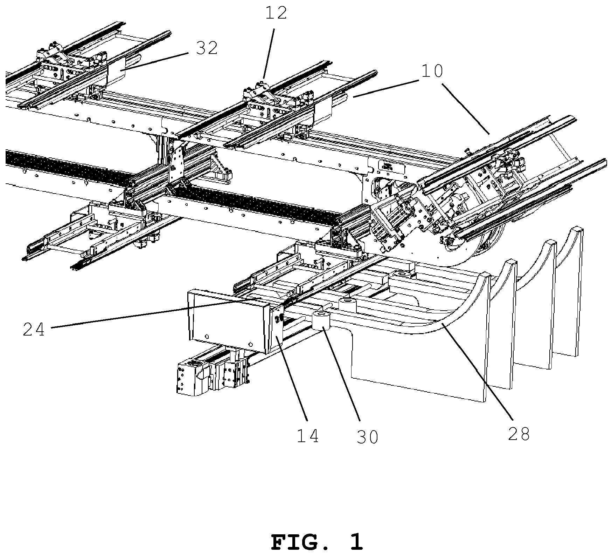

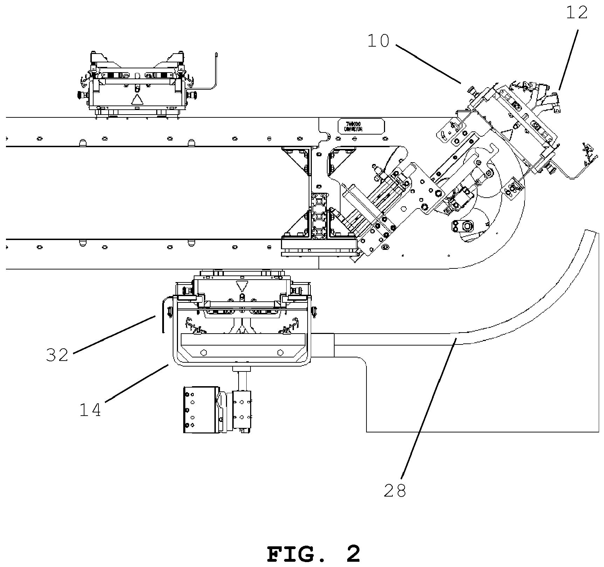

A preferred embodiment of the discharging system of the present invention will now be described in reference to Figures 1 and 2. According to this preferred embodiment, each pallet (10) comprises two pressure grippers (12) acting as holding elements for each holding a part to be machined. According to alternative embodiments the pallet can obviously comprise holding elements of another type to hold the parts to be machined without this affecting the operation of the discharging system according to the present invention.

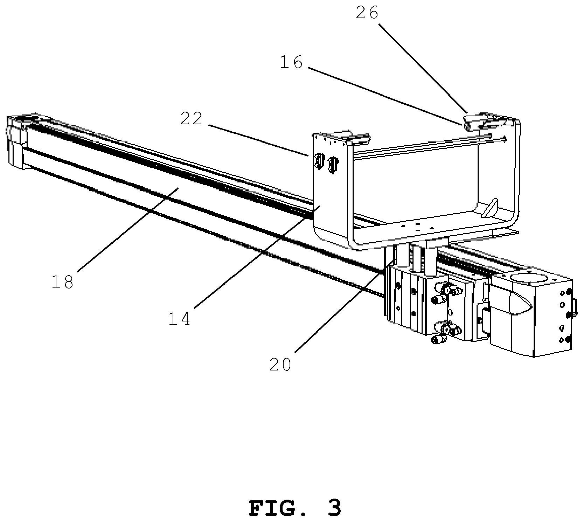

The discharging system of the present invention comprises machined part extraction means for removing a machined part from its corresponding support element. The extraction means, which will be described in detail below in reference to Figure 3, are arranged in any area of the lower portion of the machining equipment for the purpose of removing the machined parts from their corresponding strips. According to the preferred embodiment, the extraction means are located below the first machining stage of the machining equipment.

As a phase prior to the operation of the extraction means, the pressure grippers (12) cannot be performing the operation of applying pressure on (closing over) the machined parts, whether this is by means of an gripper opening manipulator or automatically by the pallet itself, etc. Therefore, the parts are held in their supports (strips) only as a result of the aforementioned "clamp" they have (having the negative shape of the strip).

Now specifically in reference to Figure 3, the different elements making up the extraction means according to the preferred embodiment of the present invention can be seen. Specifically, the extraction means comprise an extraction fork (14), two extraction rollers (16), a horizontal actuator (18), a vertical actuator (20), and sensors (22) for the detection of the machined parts.

When the pallet (10) is in the extraction position, the horizontal actuator (18) moves the fork (14) forward towards the pallet (10), in the direction transverse to the forward movement of said pallet. Once the sensors (22) detect the machined parts, the vertical actuator (20) is actuated, lowering the fork (14) and thereby separating the end of the machined parts by means of contact of said machined parts with the extraction rollers (16). During end separation, the extraction rollers come into contact with and push the parts downward, separating the end of said parts from their corresponding strip.

One skilled in the art will understand that the system of the present invention can operate without sensors (22). For example, there can be a time programmed so that the vertical actuator (20) is automatically actuated and lowers the fork (14) once a given time has lapsed after the forward movement of the fork (14) towards the pallet (10) has been initiated.

Then the horizontal actuator (18) continues by moving the fork (14) forward to the end of its path, sweeping the parts until they are completely removed from their corresponding strip and fall due to gravity.

According to the preferred embodiment of the present invention shown in the drawings, the extraction means comprise a single fork (14) which, in the case of pallets conveying two parts to be machined, removes the two parts from a pallet as said fork (14) moves in one direction, removes two other parts corresponding to the next pallet upon moving in the opposite direction, and so on and so forth. However, according to an alternative embodiment said fork (14) always performs its function of removing the machined parts in the same direction, returning to its starting position without removing any part upon its return and waiting for detection of the next machined parts corresponding to the next pallet.

According to yet another alternative embodiment, the extraction means comprise two forks, each one located on one side, which move symmetrically to the half-way point of the path for removing the machined parts from their corresponding support.

Both the horizontal actuator (18) and the vertical actuator (20) can be of any suitable type known to those skilled in the art, such as belt actuators with electric motors, pneumatic actuators, etc.

The sensors (22) allow detecting the machined parts to be extracted. According to the preferred embodiment, the sensors are photoelectric sensors, for example, light barrier type sensors, reflective mirror type sensors, reflective object type sensors, etc. The transverse lines shown in Figure 3 coming out of the sensors (22) depict the light beams between the corresponding emitters and receivers of said sensors (22).

One skilled in the art will understand that different detection means other than the photoelectric sensors of the preferred embodiment which perform the same function, such as, for example, capacitive sensors, inductive sensors, etc., can also be used.

The extraction roller (16) allows performing the separation of the end (with an initial vertical movement) and subsequent separation of the end of the machined part from its strip (extraction along the sweeping or longitudinal movement). Although a fork (14) with two extraction rollers (16) is shown in the drawings, one skilled in the art will understand that the system can operate with a single extraction roller (16) or with more than two extraction rollers. Furthermore, one skilled in the art will understand that different means other than the rollers of the preferred embodiment which perform the same function, such as, for example, a system of sliding belts, by means of a curved surface, etc., can also be used.

As it can also be seen in Figure 3, according to an alternative embodiment the fork (14) comprises orientation parts (26) for orienting the machined part and making it easier to remove it from its strip. Specifically, the orientation parts (26) improve the extraction operation. They can be used as elements orienting the machined parts which are being removed and act like a "spear point" to make extraction easier. In the case of the preferred embodiment with a single fork (14) removing the parts once off to one side and the next time in the opposite direction, there are two orientation parts (26), one performing its function when the fork moves towards one side, and the other one performing its function when the fork moves towards the opposite side. One skilled in the art will understand that in the case of the alternative embodiment in which said fork (14) performs its function of always removing the machined parts in the same direction, only one orientation part (26) is required.

One skilled in the art will understand that the orientation parts could perform by themselves all the functions of the extraction roller (end separation and sweeping), so in this case the existence of said extraction rollers would not be required.

The discharging system of the present invention also comprises discharging means for discharging removed machined parts to a part loading/unloading station. In that sense, according to the preferred embodiment of the present invention the discharging means comprise collection tracks (24), discharge tracks (28), bridge brushes (30), and a guiding finger (32).

Specifically, once the fork (14) reaches the end of its path, the detached machined part falls onto the collection tracks (24). Upon continuation of the forward movement of the pallet (10), a guiding finger (32) arranged in the pallet (10) pushes the removed machined part through said collection tracks (24) and through the discharge tracks (28) to the loading/unloading station. To that end, the guiding finger (32) is arranged in a portion of the pallet (10) behind the support from which the machined part is detached, according to the forward movement direction of the pallet, for the purpose of being able to push the machined part from behind. Specifically, according to the preferred embodiment of the present invention shown in the attached drawings, the guiding finger (32) is arranged at the rear end of the pallet (10).

Specifically, as can be seen in Figure 2, according to the preferred embodiment of the present invention one of the machined and removed parts is driven by means of said guiding finger (32) whereas the other part is driven by means of the pressure gripper (12). In this case, both the guiding finger (32) and the pressure gripper (12) constitute conveyance means for conveying the machined and removed parts.

According to an alternative embodiment, depending on the design of the pallet (10) itself and its pressure gripper(s) (12), the discharging system does not comprise any guiding finger (32) such that the pressure gripper (12) is the only conveyance means required for guiding the machined and removed part to the loading/unloading station.

According to another preferred embodiment, only the guiding finger (32) acts as conveyance means for conveying the machined and removed parts, without the pressure gripper (12) performing this function.

According to yet another preferred embodiment, the conveyance means conveying the machined and removed parts to the loading/unloading station consist of a mechanical conveyor, for example conveyors of the belt, chain, roller train type, etc. In this case, the guiding finger (32) is not required.

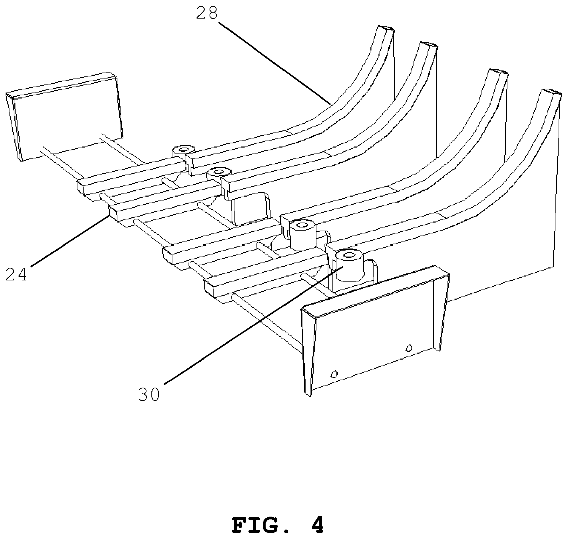

As can be observed in Figure 4, the collection tracks (24) are suspended by means of support rods, which are in turn fixed at their ends to supports for fixing to the mount of the machine. As a result of this arrangement, the extraction fork (14) can move without its lower portion running into any element. Likewise, the discharge tracks (28) are arranged after the collection tracks (24) and removed therefrom by a gap that is sufficient for allowing the passage of the extraction fork (14). To prevent the machined and removed parts from falling through said gap between the collection tracks (24) and the discharge tracks (28), the discharging means further comprise bridge brushes (30) which cover said gap allowing the passage of the machined parts over same while at the same time not preventing the passage of the extraction fork (14) through the gap. Although they are depicted in the drawing by means of a cylinder, the bridge brushes (30) actually comprise bristles around the contour of the cylinder with a length that is sufficient for covering the gap between the collection tracks (24) and the discharge tracks (28).

One skilled in the art will understand that different bridge means other than bridge brushes (30) of the preferred embodiment which perform the same function, such as, for example, double-action spring hinges, springs, flexible rubber strips, etc., can also be used.

Therefore, in summary the system of the present invention performs the discharging of the machined parts by means of the following operations:
1. Separation of the end of the part.
2. Longitudinal sweeping for removing the part from strip in which it is mounted.
3. Falling of the part (due to gravity).
4. Driving to the actual loading/unloading station, where the operator is located. According to the preferred embodiment of the present invention, the pallet itself drives the detached part to the operator by means of a guiding finger acting as a hook.
5. The operator collects the machined parts from the pallet, takes them off and places new parts on the pallet for a new work cycle.

According to the foregoing, one skilled in the art will understand that there is a possibility that each detached part can be collected and driven to the loading/unloading station by means of only the pallet itself, either by the action of a guiding finger (32) acting as a hook, by a holding element (for example, a pressure gripper (12)), or by the combination of both. In this case, the existence of collection tracks (24), discharge tracks (28), or bridge brushes (30) is not required because it is the pallet itself that performs by itself the collection and discharging functions. Therefore, according to the preferred embodiment of the present invention in which each pallet conveys two parts, once the fork (14) reaches the final of its path, one of the machined and removed parts is collected by means of a guiding finger (32), whereas the other part is collected by means of a pressure gripper (12). Upon continuation of the forward movement of the pallet (10), the guiding finger (32) and the pressure gripper (12) push their corresponding removed machined parts to the loading/unloading station. In this case, both the guiding finger (32) and the pressure gripper (12) constitute conveyance means for conveying the machined and removed parts.

According to a preferred embodiment of the present invention, the extraction means further comprise at least one collection ramp which allows assuring the falling of the removed machined part on the corresponding conveyance means (guiding finger, pressure gripper). In the collection position, the collection ramp is located below the support (the support which supports the part on the pallet), extending downward from said support to the conveyance means. Said collection ramp includes at least one through channel, which allows the passage of the conveyance means through said ramp. According to a preferred embodiment, the extraction means further comprise an actuator which allows moving the collection ramp between a lower standby position and an upper collection position, or vice versa. Therefore, when a pallet (having a machined part supported thereon) is in the extraction position, the collection ramp moves to its collection position. Once the extraction process has ended, the collection ramp moves to its standby position waiting for the next pallet to be in extraction position.

As can be seen, the unloading station to which the machined and removed parts are conveyed is the same loading station in which the operator loads the new parts to be machined onto the pallet. Therefore, the invention provides a compact system that does not take up more useful space in the factory that that which is already taken up by the machining equipment itself and allows reducing cycle time as a result of part removal automation. Furthermore, the system according to the present invention can be implemented in any previously installed machine, such that a substantial investment is not required as it is not necessary to replace the machining equipment in its entirety.

The present invention also discloses a method of discharging machined parts from machining equipment. Said discharging method can be carried out by means of the discharging system of the present invention described above. Like the discharging system, the method of discharging machined parts according to the present invention is applied to machining equipment of the part-carrying pallet loop conveying type, the pallets comprising at least one support for supporting a part to be machined.

Specifically, the discharging method according to the preferred embodiment of the present invention comprises the steps of:
- removing a machined part from its support, allowing said part to fall into the lower portion of the machining equipment under the pallet conveying loop. This step of removing the machined part from its support in turn comprises the sub-steps of:
   - providing a pallet having a machined part supported in the extraction position;
   - moving extraction means forward in a direction transverse to the forward movement of the pallet until they are located at an end of the machined part;
   - producing the separation of the end of the machined part;
   - sweeping the machined part until causing it to fall due to gravity; and
- conveying the machined and removed part to a part loading/unloading station.

According to the preferred embodiment of the present invention, the step of producing the separation of the end of the machined part is performed by lowering an extraction roller arranged in an extraction fork which form the extraction means.

According to the preferred embodiment of the present invention, the step of sweeping the machined part is performed by moving an extraction roller arranged in an extraction fork which form the extraction means forward.

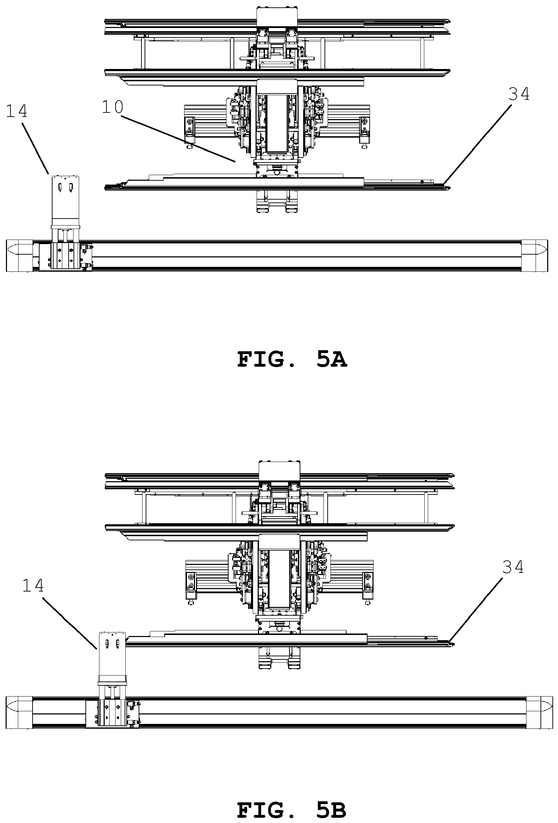

The different sub-steps making up the step of removing the machined part from its support according to the preferred embodiment of the present invention will be described in further detail below in reference to Figures 5A-5E.

It can be seen in Figure 5A that the extraction means are waiting for the pallet (10) supporting the machined parts (34) to reach the extraction position. In this situation, the extraction fork (14) is located at one end of its path.

It can be observed in Figure 5B that the horizontal actuator (18) moved the extraction fork (14) forward in the direction transverse to the forward movement of the pallet (10) itself. The horizontal actuator (18) stops the forward movement of the extraction fork (14) when the sensors (22) detect the end of the machined part (34).

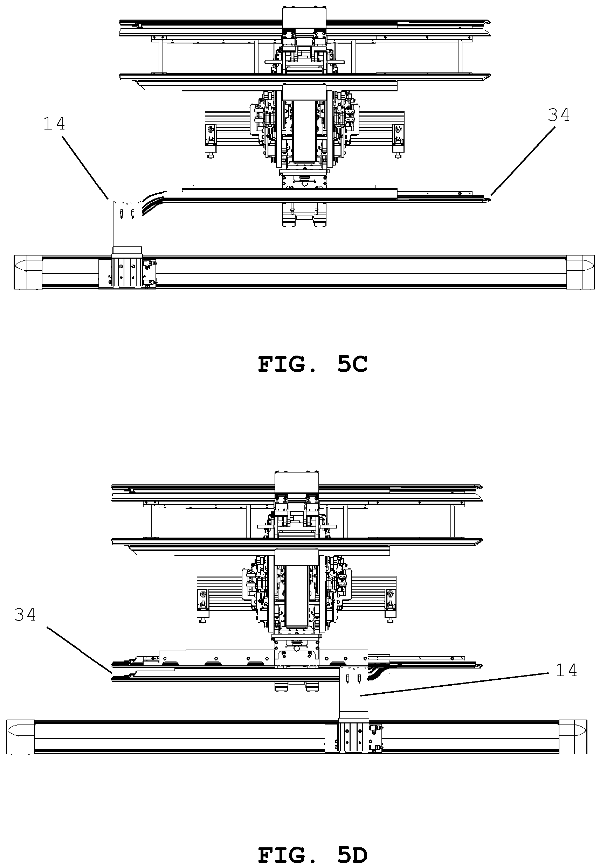

Then, as shown in Figure 5C, the vertical actuator (20) lowers the extraction fork (14) such that the extraction roller (16) comes into contact with the machined part (34) and produces the separation of the end of said machined part.

As shown in Figure 5D, the horizontal actuator (18) then additionally moves the extraction fork (14) forward, the extraction roller (16) which maintains contact with the machined part thereby sweeping said machined part (34). As the extraction roller (16) moves, the machined part (34) is gradually lowered and removed from its support.

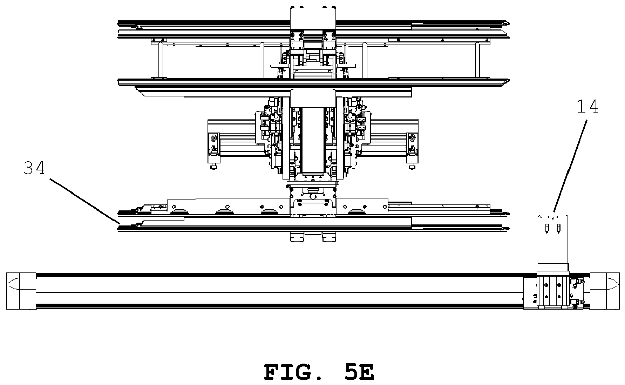

Figure 5E shows the machined part (34) completely removed from its support as it has fallen due to gravity onto the collection tracks (24). In this situation, the extraction fork (14) is located at the opposite end of its path with respect to where it was located in Figure 5A. Though not shown in the drawings, the extraction fork will then return to its initial position by means of the actuation of the horizontal actuator (18), either by performing at the same time the removal of another machined part corresponding to the next pallet or without removing any machined part in its path.

One skilled in the art will understand that to enable removing a new machined part from its support, it is first necessary to raise the extraction fork, and therefore the extraction roller, to its starting position.

According to another preferred embodiment of the present invention in which the extraction means comprise two forks (14), each one located on one side, the step of removing the machined part from its support is performed by symmetrically moving both forks to the half-way point of the path.

According to one embodiment of the present invention, the step of conveying the machined part to the loading/unloading station consists of actively conveying said machined part by means of dedicated conveyance means.

According to another embodiment of the present invention, the step of conveying the machined part to the loading/unloading station consists of driving said machined and removed part by the pallet itself to the loading/unloading station, either by the action of a guiding finger (32) acting as a hook, by a holding element (for example, a pressure gripper (12)), or by the combination of both.

According to another embodiment of the present invention, once the machined part is removed from its support, it is left to fall onto collection tracks (24) and is conveyed along the collection tracks (24) and discharge tracks (28) to the loading/unloading station.

## Claims

1. A system of discharging machined parts from machining equipment, with the machining equipment being of the part-carrying pallet loop conveying type, the pallets (10) comprising at least one support for supporting a part to be machined, the system comprising:
- machined part extraction means for removing a machined part from its corresponding support, comprising:
• at least one extraction fork (14),
• end separation and sweeping means,
• a horizontal actuator (18) to move the fork (14) forward in the direction transverse to the forward movement of the pallet (10), and
• a vertical actuator (20) to lower the fork (14) and thereby separate the end of the part by means of contact with the end separation and sweeping means,
with said extraction means being arranged in the lower portion of the machining equipment under the pallet (10) conveying loop; and
- discharging means for discharging removed machined parts to a part loading/unloading station.

2. The system according to claim 1, **characterized in that** the end separation and sweeping means comprise at least one extraction roller (16).

3. The system according to any of the preceding claims, **characterized in that** the extraction means further comprise sensors (22) for detecting a machined part during the horizontal forward movement of the fork (14) and thereby lowering said fork (14) in order to separate the end of the part.

4. The system according to any of the preceding claims, **characterized in that** the fork (14) comprises at least one orientation part (26) for orienting the machined part and making it easier to remove said machined part from its support.

5. The system according to any of the preceding claims, **characterized in that** the extraction means comprise two forks (14), each one located on one side, which move symmetrically to the half-way point of the path for removing the machined part from its corresponding support.

6. The system according to any of the preceding claims, **characterized in that** the discharging means comprise conveyance means for conveying the machined and removed parts to the loading/unloading station.

7. The system according to claim 6, **characterized in that** the discharging means further comprise:
- collection tracks (24) on which a machined and removed part falls;
- discharge tracks (28) arranged after the collection tracks (24) and removed therefrom by a gap that is sufficient for allowing the passage of the extraction fork (14), wherein the discharge tracks (28) guide the machined and removed parts to the loading/unloading station; and
- bridge means for closing the gap between the collection tracks (24) and the discharge tracks (28), allowing the passage of the machined parts over same and at the same time allowing the passage of the extraction fork (14) through said gap.

8. The system according to any of claims 6 and 7, **characterized in that** the conveyance means are made up of a holding element which is part of the pallet and drives the machined part once it has been removed from the support.

9. The system according to any of claims 6 to 8, **characterized in that** the conveyance means comprise a guiding finger (32) arranged in a portion of the pallet (10) behind the support, wherein said guiding finger (32) drives the machined and removed part.

10. The system according to any of claims 6 to 9, **characterized in that** the extraction means further comprise at least one collection ramp, which is located below the support in the collection position, extending downward from said support to the conveyance means.

11. A discharging method carried out by means of the system of discharging machined parts from machining equipment according to any of claims 1 to 10, with the machining equipment being of the part-carrying pallet loop conveying type, the pallets comprising at least one support for supporting a part to be machined, the method comprising the steps of:
- removing a machined part from its support, allowing said part to fall into the lower portion of the machining equipment under the pallet conveying loop, said step in turn comprising the sub-steps of:
- providing a pallet having a machined part supported in the extraction position;
- moving extraction means forward in a direction transverse to the forward movement of the pallet until they are located at an end of the machined part;
- producing the separation of the end of the machined part;
- sweeping the machined part until causing it to fall due to gravity; and
- conveying the machined and removed part to a part loading/unloading station.

12. The method according to claim 11, **characterized in that** the step of producing the separation of the end of the machined part is performed by lowering an extraction roller arranged in an extraction fork which form the extraction means.

13. The method according to any of claims 11 and 12, **characterized in that** the step of sweeping the machined part is performed by moving an extraction roller arranged in an extraction fork which form the extraction means forward.

14. The method according to any of claims 11, 12, and 13, **characterized in that** the step of conveying the machined part to the loading/unloading station consists of the pallet itself driving said machined and removed part to the loading/unloading station.

15. The method according to claim 14, **characterized in that** the driving of the machined and removed part is done by the pallet itself by means of a guiding finger.
